# EUROPEAN PATENT APPLICATION

(11) **EP 2 775 419 A1**
(43) Date of publication of application: **10.09.2014**
(21) Application number: 13191062.2
(22) Date of filing: 31.10.2013
(51) Int. Cl.: G06F 21/62, G06F 21/32

(54) **Mobile terminal and control method thereof**

(30) Priority: 05.03.2013 KR 20130023539
(71) Applicant: LG Electronics Inc., Yeongdeungpo-gu Seoul 150-721 (KR)
(72) Inventor: Kim, Hyungsup, Seoul (KR); Choe, Dami, Seoul (KR); Joung, Wonseok, Seoul (KR); Park, Jungmin, Seoul (KR); Shin, Yongkyoung, Seoul (KR)
(74) Representative: Urner, Peter

(57) **Abstract**

A mobile terminal and a control method thereof are provided. The mobile terminal includes a display unit (151) configured to output visual information; a memory (160) configured to store contents; a user input unit (130) configured to set an access range with respect to contents; and a controller (180) configured to determine whether to output contents stored in the memory (160) according to an output request when the output request with respect to the contents is received in a state in which an operation limit mode is activated, wherein the controller (180) outputs the contents corresponding to the output request to the display unit (151) according to whether the contents corresponding to the output request is within the access range.

## Description

### BACKGROUND OF THE INVENTION

### Field of the Invention

The present invention relates to a mobile terminal capable of outputting visual information and a control method thereof.

### Description of the Related Art

In general, terminals may be divided into a mobile terminal and stationary terminal according to whether or not terminals are movable. In addition, mobile terminals may be divided into a handheld terminal and a vehicle mount terminal according to whether or not users can directly carry it around.

As such functions become more diversified, the mobile terminal can support more complicated functions such as capturing images or video, reproducing music or video files, playing games, receiving broadcast signals, and the like. By comprehensively and collectively implementing such functions, the mobile terminal may be embodied in the form of a multimedia player or device. Efforts are ongoing to support and increase the functionality of mobile terminals. Such efforts include software and hardware improvements, as well as changes and improvements in the structural components which form the mobile terminal.

Also, in such a mobile terminal, various types of contents (e.g., photographs, videos, music, memo), and the like, may be stored in a memory thereof, and such contents may be output to a display unit according to a user request.

### SUMMARY OF THE INVENTION

An aspect of the present invention is to provide a mobile terminal capable of protecting user privacy from others, and a control method thereof.

According to an embodiment of the present invention, there is provided a mobile terminal including: a display unit configured to output visual information; a memory configured to store contents; a user input unit configured to set an access range with respect to contents; and a controller configured to determine whether to output contents stored in the memory according to an output request when the output request with respect to the contents is received in a state in which an operation limit mode is activated, wherein the controller outputs the contents corresponding to the output request to the display unit according to whether the contents corresponding to the output request is within the access range.

In an embodiment of the present invention, when the contents corresponding to the output request is within the access range, the controller may output the contents corresponding to the output request to the display unit, and when the contents corresponding to the output request is not within the access range, the controller may not output the contents corresponding to the output request.

In an embodiment of the present invention, when the contents corresponding to the output request is not within the access range, the controller may output notification information indicating that the contents corresponding to the output request is not within the access range through at least one of visual, audible, and tactile methods.

In an embodiment of the present invention, induction information inducing inputting of user identification information corresponding to a pre-set scheme for deactivating the operation limit mode may be output to the display unit.

In an embodiment of the present invention, the access range may individually include contents stored in the memory or at least one contents, and may be set for a group formed on the basis of a pre-set reference.

In an embodiment of the present invention, the controller may execute an access range setting mode for setting the access range on the basis of a user selection and output a select window for selecting contents output to at least a portion of the contents output to the display unit or to a region adjacent to the contents, and when a touch input is applied to the select window, the controller may include the output contents in the access range.

In an embodiment of the present invention, graphic objects corresponding to groups formed on the basis of the pre-set reference may be output to the display unit, and when an access range setting mode for setting the access range is executed, the controller may output a select window for receiving a control command for setting the group as an access range to at least a portion of the graphic object or a region adjacent to the graphic object, and when a touch input is applied to the select window, the controller may set the group corresponding to the select window to which the touch input has been applied, as an access range.

In an embodiment of the present invention, in a state in which the access range is not set for the contents, when the operation limit mode is activated, the controller may automatically set the group including the contents output to the display unit, as the access range.

In an embodiment of the present invention, the he mobile terminal may further include: at least one of a camera and a fingerprint recognizing unit, and the operation limit mode may be activated when a pre-set proper user is not recognized for a pre-set period of time through at least one of the camera and the fingerprint recognizing unit.

In an embodiment of the present invention, the he operation limit mode may be activated when a function icon output to the display unit is selected after the access range is set, or when a voice command corresponding to a pre-set word is applied.

In an embodiment of the present invention, the he mobile terminal may further include: at least one of a camera and a fingerprint recognizing unit, and when the operation limit mode is activated, the controller may determine whether identification information recognized through at least one of the camera and the fingerprint recognizing unit corresponds to a pre-set proper user.

In an embodiment of the present invention, when the identification information is recognized to correspond to the pre-set proper user according to the determination result, the controller may deactivate the operation limit mode.

In an embodiment of the present invention, in a state in which the operation limit mode is activated, when a function different from an output function with respect to contents within the access range is requested, the controller may limit execution of the different function.

In an embodiment of the present invention, the different function may be a function of transmitting at least one of contents within the access range to an external terminal or an external server.

According to an embodiment of the present invention, there is also provided a mobile terminal including: a user input unit configured to set an access range with respect to an application installed in the mobile terminal; and a controller configured to activate an operation limit mode in response to a first control command input through the user input unit, wherein when a second control command for executing an application is input in a state in which the operation limit mode is activated, the controller may execute an application for which the second control command has been applied according to whether the application for which the second control command has been applied is within the access range.

According to an embodiment of the present invention, there is also provided a control method of a mobile terminal, including: setting an access range with respect to contents stored in a memory; activating an operation limit mode for partially limiting access to the contents; determining whether contents corresponding to an output request is within the access range in response to the output request with respect to the contents; and when the contents corresponding to the output request is included in the access range, outputting the contents corresponding to the output request to a display unit.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings, which are given by illustration only, and thus are not limitative of the present invention, and wherein:

FIG. 1 is a block diagram of a mobile terminal according to an embodiment of the present invention.

FIG. 2A and 2B are front perspective views illustrating an example of a mobile terminal according to an embodiment of the present invention.

FIG. 3 is a flow chart illustrating a control method of a mobile terminal according to an embodiment of the present invention.

FIG. 4 is a conceptual view illustrating the control method of FIG. 3.

FIGS. 5A, 5B, and 5C are conceptual views illustrating a range to which an operation limit mode is applicable in the mobile terminal according to an embodiment of the present invention.

FIGS. 6A and 6B are conceptual views illustrating a method for setting an access range with respect to contents and an access range in the mobile terminal according to an embodiment of the present invention.

FIGS. 7A, 7B, and 7C are .conceptual views illustrating a method for activating the operation limit mode in the mobile terminal according to an embodiment of the present invention.

FIGS. 8A, 8B, and 8C are conceptual views illustrating a method for deactivating the operation limit mode in the mobile terminal according to an embodiment of the present invention.

### DETAILED DESCRIPTION OF THE INVENTION

The embodiments of the present invention will now be described with reference to the accompanying drawings, in which like numbers refer to like elements throughout although the embodiments are different, and a description of the like elements a first embodiment will be used for those of the different embodiment. In the following description, usage of suffixes such as 'module', 'part' or 'unit' used for referring to elements is given merely to facilitate explanation of the present invention, without having any significant meaning by itself. In describing the present invention, if a detailed explanation for a related known function or construction is considered to unnecessarily divert the gist of the present invention, such explanation has been omitted but would be understood by those skilled in the art. The accompanying drawings of the present invention aim to facilitate understanding of the present invention and should not be construed as limited to the accompanying drawings.

Mobile terminals described in the present disclosure may include mobile phones, smart phones, notebook computers, tablet computers, digital broadcast receivers, PDAs (Personal Digital Assistants), PMPs (Portable Multimedia Player), navigation devices, slate PCs, tablet PCs, ultra-books, and the like. However, it would be understood by a person skilled in the art that the configuration according to embodiments of the present invention can be also applicable to the fixed types of terminals such as digital TVs, desk top computers, and the like, except for any elements especially configured for a mobile purpose.

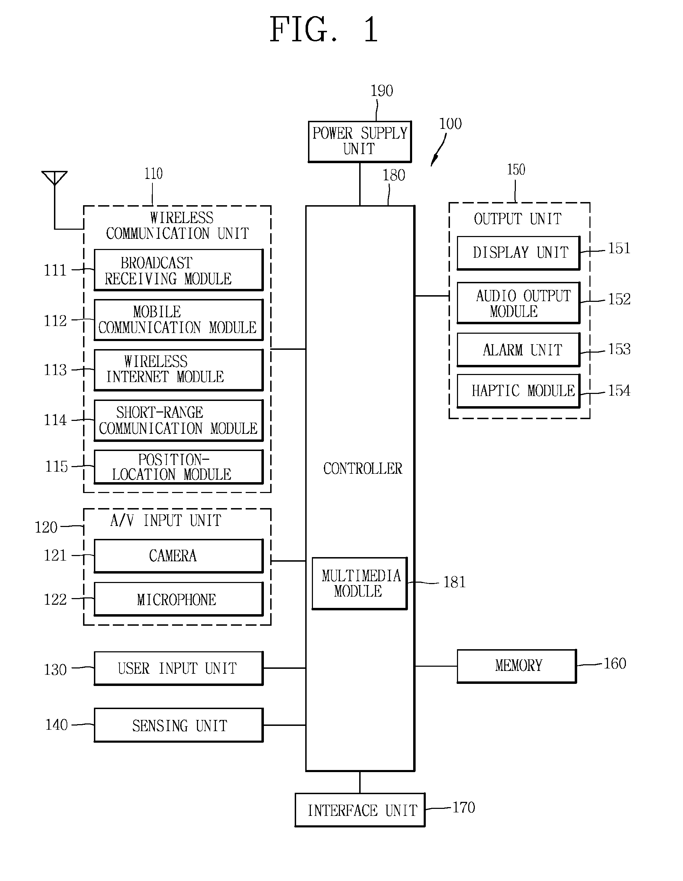

FIG. 1 is a block diagram of a mobile terminal according to an embodiment of the present invention.

The mobile terminal 100 may include a wireless communication unit 110, an AN (Audio/Video) input unit 120, a user input unit 130, a sensing unit 140, an output unit 150, a memory 160, an interface unit 170, a controller 180, and a power supply unit 190, etc. FIG. 1 shows the mobile terminal as having various components, but it should be understood that implementing all of the illustrated components is not a requirement. Greater or fewer components may alternatively be implemented.

The elements of the mobile terminal will be described in detail as follows.

The wireless communication unit 110 typically includes one or more modules allowing radio communication between the mobile terminal 100 and a wireless communication system or a network in which the mobile terminal is located. For example, the wireless communication unit may include at least one of a broadcast receiving module 111, a mobile communication module 112, a wireless Internet module 113, a short-range communication module 114, and a location information module 115.

The broadcast receiving module 111 receives broadcast signals and/or broadcast associated information from an external broadcast management server (or other network entity) via a broadcast channel.

The broadcast channel may include a satellite channel and/or a terrestrial channel. The broadcast management server may be a server that generates and transmits a broadcast signal and/or broadcast associated information or a server that receives a previously generated broadcast signal and/or broadcast associated information and transmits the same to a terminal. The broadcast signal may include a TV broadcast signal, a radio broadcast signal, a data broadcast signal, and the like. Also, the broadcast signal may further include a broadcast signal combined with a TV or radio broadcast signal.

The broadcast associated information may refer to information associated with a broadcast channel, a broadcast program or a broadcast service provider. The broadcast associated information may also be provided via a mobile communication network and, in this case, the broadcast associated information may be received by the mobile communication module 112.

The broadcast associated information may exist in various forms. For example, it may exist in the form of an electronic program guide (EPG) of digital multimedia broadcasting (DMB), electronic service guide (ESG) of digital video broadcast-handheld (DVB-H), and the like.

The broadcast receiving module 111 may be configured to receive signals broadcast by using various types of broadcast systems. In particular, the broadcast receiving module 111 may receive a digital broadcast by using a digital broadcast system such as multimedia broadcasting-terrestrial (DMB-T), digital multimedia broadcasting-satellite (DMB-S), digital video broadcast-handheld (DVB-H), the data broadcasting system known as media forward link only (MediaFLO^{®}), integrated services digital broadcast-terrestrial (ISDB-T), etc. The broadcast receiving module 111 may be configured to be suitable for every broadcast system that provides a broadcast signal as well as the above-mentioned digital broadcast systems.

Broadcast signals and/or broadcast-associated information received via the broadcast receiving module 111 may be stored in the memory 160.

The mobile communication module 112 transmits and/or receives radio signals to and/or from at least one of a base station, an external terminal and a server. Such radio signals may include a voice call signal, a video call signal or various types of data according to text and/or multimedia message transmission and/or reception.

The wireless Internet module 113 supports wireless Internet access for the mobile terminal. This module may be internally or externally coupled to the terminal. The wireless Internet access technique implemented may include a WLAN (Wireless LAN) (Wi-Fi), Wibro (Wireless broadband), Wimax (World Interoperability for Microwave Access), HSDPA (High Speed Downlink Packet Access), or the like.

The short-range communication module 114 is a module for supporting short range communications. Some examples of short-range communication technology include Bluetooth^{™}, Radio Frequency IDentification (RFID), Infrared Data Association (IrDA), Ultra-WideBand (UWB), ZigBee^{™}, and the like.

The location information module 115 is a module for checking or acquiring a location (or position) of the mobile terminal. A typical example of the location information module is a GPS (Global Positioning System).

With reference to FIG. 1, the AN input unit 120 is configured to receive an audio or video signal. The A/V input unit 120 may include a camera 121 and a microphone 122. The camera 121 processes image data of still pictures or video obtained by an image capture device in a video capturing mode or an image capturing mode. The processed image frames may be displayed on a display unit 151.

The image frames processed by the camera 121 may be stored in the memory 160 (or other storage medium) or transmitted via the wireless communication unit 110. Two or more cameras 121 may be provided according to the configuration of the mobile terminal.

The microphone 122 may receive sounds (audible data) via a microphone in a phone call mode, a recording mode, a voice recognition mode, and the like, and can process such sounds into audio data. The processed audio (voice) data may be converted for output into a format transmittable to a mobile communication base station via the mobile communication module 112 in case of the phone call mode. The microphone 122 may implement various types of noise canceling (or suppression) algorithms to cancel (or suppress) noise or interference generated in the course of receiving and transmitting audio signals.

The user input unit 130 may generate input data from commands entered by a user to control various operations of the mobile terminal. The user input unit 130 may include a keypad, a dome switch, a touch pad, a jog wheel, a jog switch, and the like.

The sensing unit 140 detects a current status (or state) of the mobile terminal 100 such as an opened or closed state of the mobile terminal 100, a location of the mobile terminal 100, the presence or absence of user contact with the mobile terminal 100 (i.e., touch inputs), the orientation of the mobile terminal 100, an acceleration or deceleration movement and direction of the mobile terminal 100, etc., and generates commands or signals for controlling the operation of the mobile terminal 100. For example, when the mobile terminal 100 is implemented as a slide type mobile phone, the sensing unit 140 may sense whether the slide phone is opened or closed. In addition, the sensing unit 140 can detect whether or not the power supply unit 190 supplies power or whether or not the interface unit 170 is coupled with an external device.

The output unit 150 is configured to provide outputs in a visual, audible, and/or tactile manner (e.g., audio signal, video signal, alarm signal, vibration signal, etc.). The output unit 150 may include the display unit 151, an audio output module 152, an alarm unit 153, a haptic module 154, and the like.

The display unit 151 may display (output) information processed in the mobile terminal 100. For example, when the mobile terminal 100 is in a phone call mode, the display unit 151 may display a User Interface (UI) or a Graphic User Interface (GUI) associated with a call or other communication (such as text messaging, multimedia file downloading, etc.). When the mobile terminal 100 is in a video call mode or image capturing mode, the display unit 151 may display a captured image and/or received image, a UI or GUI that shows videos or images and functions related thereto, and the like.

The display unit 151 may include at least one of a Liquid Crystal Display (LCD), a Thin Film Transistor-LCD (TFT-LCD), an Organic Light Emitting Diode (OLED) display, a flexible display, a three-dimensional (3D) display, and an e-ink display.

Some of them may be configured to be transparent or light-transmissive to allow viewing of the exterior, which may be called transparent displays. A typical transparent display may be, for example, a TOLED (Transparent Organic Light Emitting Diode) display, or the like. Through such configuration, the user can view an object positioned at the rear side of the terminal body through the region occupied by the display unit 151 of the terminal body.

The mobile terminal 100 may include two or more display units according to its particular desired embodiment. For example, a plurality of display units may be separately or integrally disposed on one surface of the mobile terminal, or may be separately disposed on mutually different surfaces.

Meanwhile, when the display unit 151 and a sensor (referred to as a 'touch sensor', hereinafter) for detecting a touch operation are overlaid in a layered manner to form a touch screen, the display unit 151 may function as both an input device and an output device. The touch sensor may have a form of a touch film, a touch sheet, a touch pad, and the like.

The touch sensor may be configured to convert pressure applied to a particular portion of the display unit 151 or a change in the capacitance or the like generated at a particular portion of the display unit 151 into an electrical input signal. The touch sensor may be configured to detect the pressure when a touch is applied, as well as the touched position and area.

When there is a touch input with respect to the touch sensor, a corresponding signal (signals) are transmitted to a touch controller. The touch controller processes the signals and transmits corresponding data to the controller 180. Accordingly, the controller 180 may recognize which portion of the display unit 151 has been touched.

With reference to FIG. 1, a proximity sensor 141 may be disposed within or near the touch screen. The proximity sensor 141 is a sensor for detecting the presence or absence of an object relative to a certain detection surface or an object that exists nearby by using the force of electromagnetism or infrared rays without a physical contact. Thus, the proximity sensor 141 has a considerably longer life span compared with a contact type sensor, and it can be utilized for various purposes.

Examples of the proximity sensor 141 may include a transmission type photoelectric sensor, a direct reflection type photoelectric sensor, a mirror-reflection type photoelectric sensor, an RF oscillation type proximity sensor, a capacitance type proximity sensor, a magnetic proximity sensor, an infrared proximity sensor, and the like. In case where the touch screen is the capacitance type, proximity of the pointer is detected by a change in electric field according to the proximity of the pointer. In this case, the touch screen (touch sensor) may be classified as a proximity sensor.

In the following description, for the sake of brevity, recognition of the pointer positioned to be close to the touch screen will be called a 'proximity touch', while recognition of actual contacting of the pointer on the touch screen will be called a 'contact touch'. In this case, when the pointer is in the state of the proximity touch, it means that the pointer is positioned to correspond vertically to the touch screen.

By employing the proximity sensor 141, a proximity touch and a proximity touch pattern (e.g., a proximity touch distance, a proximity touch speed, a proximity touch time, a proximity touch position, a proximity touch movement state, or the like) can be detected, and information corresponding to the detected proximity touch operation and the proximity touch pattern can be outputted to the touch screen.

The audio output module 152 may convert and output as sound audio data received from the wireless communication unit 110 or stored in the memory 160 in a call signal reception mode, a call mode, a record mode, a voice recognition mode, a broadcast reception mode, and the like. Also, the audio output module 152 may provide audible outputs related to a particular function performed by the mobile terminal 100 (e.g., a call signal reception sound, a message reception sound, etc.). The audio output module 152 may include a speaker, a buzzer, or other sound generating device.

The alarm unit 153 may provide outputs to inform about the occurrence of an event of the mobile terminal 100. Typical events may include call reception, message reception, key signal inputs, a touch input etc. In addition to audio or video outputs, the alarm unit 153 may provide outputs in a different manner to inform about the occurrence of an event. For example, the alarm unit 153 may provide an output in the form of vibrations. When a call, a message, or some other incoming communication is received, the alarm unit 153 may provide tactile outputs (i.e., vibrations) to inform the user thereof. By providing such tactile outputs, the user can recognize the occurrence of various events even if his mobile phone is in the user's pocket. Outputs informing about the occurrence of an event may be also provided via the display unit 151 or the audio output module 152. The display unit 151 and the audio output module 152 may be classified as a part of the alarm unit 153.

The haptic module 154 generates various tactile effects the user may feel. A typical example of the tactile effects generated by the haptic module 154 is vibration. The strength and pattern of the haptic module 154 can be controlled. For example, different vibrations may be combined to be outputted or sequentially outputted.

Besides vibration, the haptic module 154 may generate various other tactile effects such as an effect by stimulation such as a pin arrangement vertically moving with respect to a contact skin, a spray force or suction force of air through a jet orifice or a suction opening, a contact on the skin, a contact of an electrode, electrostatic force, etc., an effect by reproducing the sense of cold and warmth using an element that can absorb or generate heat.

The haptic module 154 may be implemented to allow the user to feel a tactile effect through a muscle sensation such as fingers or arm of the user, as well as transferring the tactile effect through a direct contact. Two or more haptic modules 154 may be provided according to the configuration of the mobile terminal 100.

The memory 160 may store software programs used for the processing and controlling operations performed by the controller 180, or may temporarily store data (e.g., a phonebook, messages, still images, video, etc.) that are inputted or outputted. In addition, the memory 160 may store data regarding various patterns of vibrations and audio signals outputted when a touch is inputted to the touch screen.

The memory 160 may include at least one type of storage medium including a Flash memory, a hard disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 160 over the Internet.

The interface unit 170 serves as an interface with every external device connected with the mobile terminal 100. For example, the external devices may transmit data to an external device, receives and transmits power to each element of the mobile terminal 100, or transmits internal data of the mobile terminal 100 to an external device. For example, the interface unit 170 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating the authority of using the mobile terminal 100 and may include a user identity module (UIM), a subscriber identity module (SIM) a universal subscriber identity module (USIM), and the like. In addition, the device having the identification module (referred to as 'identifying device', hereinafter) may take the form of a smart card. Accordingly, the identifying device may be connected with the terminal 100 via a port.

When the mobile terminal 100 is connected with an external cradle, the interface unit 170 may serve as a passage to allow power from the cradle to be supplied therethrough to the mobile terminal 100 or may serve as a passage to allow various command signals inputted by the user from the cradle to be transferred to the mobile terminal therethrough. Various command signals or power inputted from the cradle may operate as signals for recognizing that the mobile terminal is properly mounted on the cradle.

The controller 180 typically controls the general operations of the mobile terminal. For example, the controller 180 performs controlling and processing associated with voice calls, data communications, video calls, and the like. The controller 180 may include a multimedia module 181 for reproducing multimedia data. The multimedia module 181 may be configured within the controller 180 or may be configured to be separated from the controller 180.

The controller 180 may perform a pattern recognition processing to recognize a handwriting input or a picture drawing input performed on the touch screen as characters or images, respectively.

Also, when a state of the mobile terminal satisfies pre-set conditions, the controller 180 may execute a locked state for limiting an input of a control command of the user with respect to applications. Also, in a locked state, the controller may control a locked screen displayed on the locked state based on a touch input sensed through the display unit.

The power supply unit 190 receives external power or internal power and supplies appropriate power required for operating respective elements and components under the control of the controller 180.

Various embodiments described herein may be implemented in a computer-readable or its similar medium using, for example, software, hardware, or any combination thereof.

For hardware implementation, the embodiments described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic units designed to perform the functions described herein. In some cases, such embodiments may be implemented by the controller 180 itself.

For software implementation, the embodiments such as procedures or functions described herein may be implemented by separate software modules. Each software module may perform one or more functions or operations described herein.

Software codes can be implemented by a software application written in any suitable programming language. The software codes may be stored in the memory 160 and executed by the controller 180.

The mobile terminal according to an embodiment of the present invention described above with reference to FIG. 1, the mobile terminal in which components of the mobile terminal are disposed, or the structure of the mobile terminal will be described.

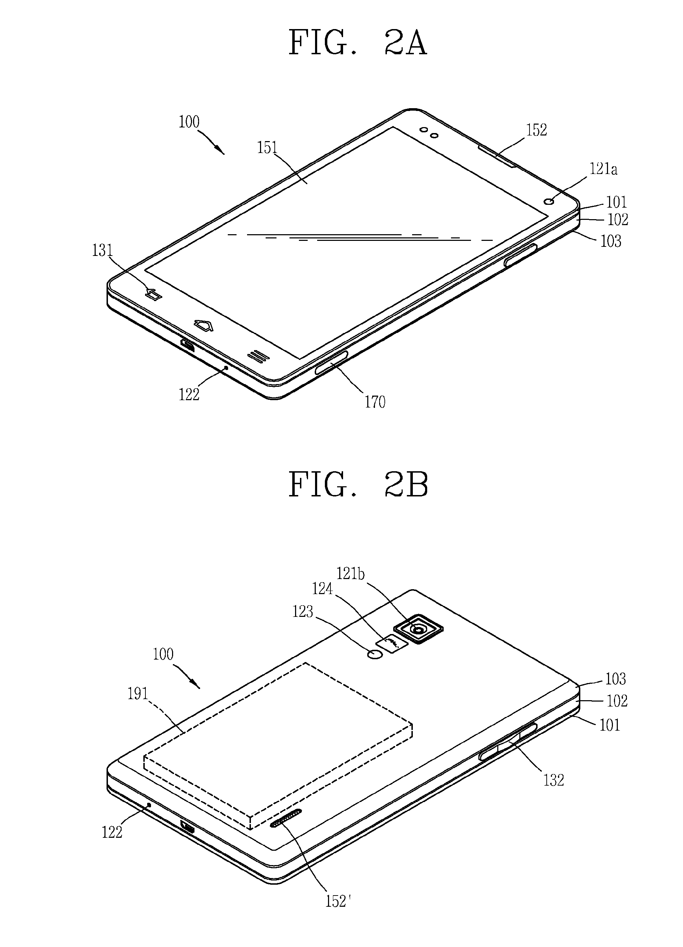

FIG. 2A is a front perspective view of the mobile terminal according to an embodiment of the present invention, and FIG. 2B is a rear perspective view of the mobile terminal illustrated in FIG. 2A.

The disclosed mobile terminal has a bar type terminal body. However, the present invention is not limited thereto and may be applicable to various structures such as a slide type mobile terminal, a folder type mobile terminal, a swing type mobile terminal, a swivel type mobile terminal, etc, in which two or more bodies are combined to be relatively movable.

As illustrated, the terminal body 100 (referred to as 'body', hereinafter) includes a front surface, a lateral surface, and a rear surface. Also, the body includes both ends formed in a length direction.

The body includes a case (or casing, housing, cover, etc.) constituting the external appearance. In this embodiment, the case may include a front case 101 and a rear case 102. Various electronic components are installed in the space between the front case 101 and the rear case 102. One or more intermediate cases may be additionally disposed between the front case 101 and the rear case 102.

The cases may be formed by injection-molding a synthetic resin or may be made of a metallic material such as stainless steel (STS) or titanium (Ti), etc.

The display unit 151, the audio output module 152, the camera 121, the user input unit 130/131, 132, the microphone 122, the interface unit 170, etc. may be disposed mainly on the front case 101 of the terminal body 100.

The display unit 151 occupies the most of a main surface of the front case 101. The audio output unit 151 and the camera 121 are disposed at a region adjacent to one end portion among both end portions of the display unit 151, and the user input unit 131 and the microphone 122 are disposed at a region adjacent to another end portion. The user input unit 132 and the interface unit 170 may be disposed at the sides of the front case 101 and the rear case 102. The microphone 122 may be disposed on the other end of the body 100.

The user input unit 130 is manipulated to receive a command for controlling the operation of the mobile terminal 100 and may include a plurality of manipulation units 131 and 132. The manipulation units 131 and 132 may be generally referred to as a manipulating portion, and various methods and techniques can be employed for the manipulation portion so long as they can be operated by the user in a tactile manner.

Content inputted by the first and second manipulation units 131 and 132 can be variably set. For example, the first manipulation unit 131 may receive a command such as starting, ending, scrolling, etc., and the second manipulation unit 132 may receive a command such as controlling of the size of a sound outputted from the audio output unit 152 or conversion into a touch recognition mode of the display unit 151.

With reference to FIG. 2B, an audio output unit 152' may be additionally disposed on the rear surface of the terminal body. The audio output module 152' may implement stereophonic sound functions in conjunction with the audio output module 152 (See FIG. 2A) and may be also used for implementing a speaker phone mode for call communication.

The power supply unit 190 for supplying power to the mobile terminal 100 is mounted on the terminal body. The power supply unit 190 may be installed within the terminal body or may be directly attached to or detached from the exterior of the terminal body.

A touch pad 135 for detecting a touch may be additionally mounted on the rear case 102. The touch pad 135 may be configured to be light transmissive like the display unit 151. In this case, when the display unit 151 is configured to output visual information from both sides thereof, the visual information may be recognized also via the touch pad 135. Alternatively, a display may be additionally mounted on the touch pad so that a touch screen may be disposed on the rear case 102.

A camera 121' may additionally be disposed on the rear case 102 of the terminal body. The camera 121' may have an image capture direction which is substantially opposite to that of the camera 121 (See FIG. 2a), and have a different number of pixels than the camera 121.

For example, the camera 121 may have a smaller number of pixels to capture an image of the user's face and transmit such image to another party, and the camera 121' may have a larger number of pixels to capture an image of a general object and not immediately transmit it in most cases. The cameras 121 and 121' may be installed on the terminal body such that they can be rotatable or popped up.

A flash 123 and a mirror 124 may be additionally disposed adjacent to the camera 121'. When an image of a subject is captured with the camera 121', the flash 123 illuminates the subject. The mirror 124 allows the user to see himself when he wants to capture his own image (i.e., self-image capturing) by using the camera 121'.

An audio output unit 252' may be additionally disposed on the rear surface of the terminal body. The audio output unit 252' may implement a stereoscopic function along with the audio output module 22 (See FIG. 2A), and may be used for implementing a speaker phone mode during call communication.

A power supply unit 190 for supplying power to the mobile terminal 100 may be installed on the terminal body. The power supply unit 190 may be installed in the terminal body or may be directly detached from the outside of the terminal body.

A touch pad 135 for detecting a touch may be additionally mounted on the rear case 102. Such a touch pad 135 may be configured to be light-transmissive like the display unit 151. In this case, when the display unit 151 is configured to output visual information from both surfaces thereof, the visual information may be recognized also through the touch pad 135. The information output to the both surfaces of the display unit 151 may be controlled by the touch pad 135. Also, a display unit may be additionally mounted on the touch pad 135, so a touch screen may be displayed on the rear case 102.

The touch pad 135 is operated in association with the display unit 151 of the front case 101. The touch pad 135 may be disposed to be parallel on the rear side of the display unit 151. The touch pad 135 may have the same size as the display unit 151 or smaller.

Also, the mobile terminal according to an embodiment of the present invention that may include one or more of the components as described above may have an operation limit mode in which an access range with respect to an output out contents stored in the mobile terminal and an additional function (e.g., send, delete, or the like) associated with the contents. Namely, in the mobile terminal according to an embodiment of the present invention, when the operation limit mode is activated, contents within an access range, namely, contents allowed to be accessed, may be permitted to be output. In addition, in the mobile terminal according to an embodiment of the present invention, in the mobile terminal according to an embodiment of the present invention, when execution of an additional function with respect to access-permitted contents is requested, the additional function may be permitted or limited according to whether the additional function is within an access range.

Meanwhile, in the mobile terminal according to an embodiment of the present invention, in addition to setting an access range with respect to contents, an access range may also be set for an application installed in the mobile terminal. Thus, in the mobile terminal according to an embodiment of the present invention, in a state in which the operation limit mode is activated, a function related to an application within an access range may be performed.

In this manner, in the mobile terminal according to an embodiment of the present invention, since the operation limit mode is provided, when a third party, not an authorized user with respect to the mobile terminal, attempts to use the mobile terminal, functions with respect to contents or applications are executed within a pre-set access range, thus protecting privacy of a proper user with respect to the mobile terminal. Here, a proper user may be an owner of the mobile terminal.

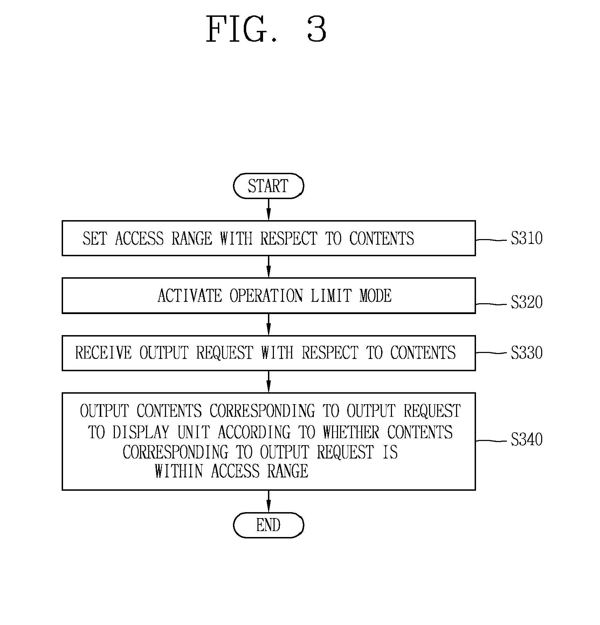

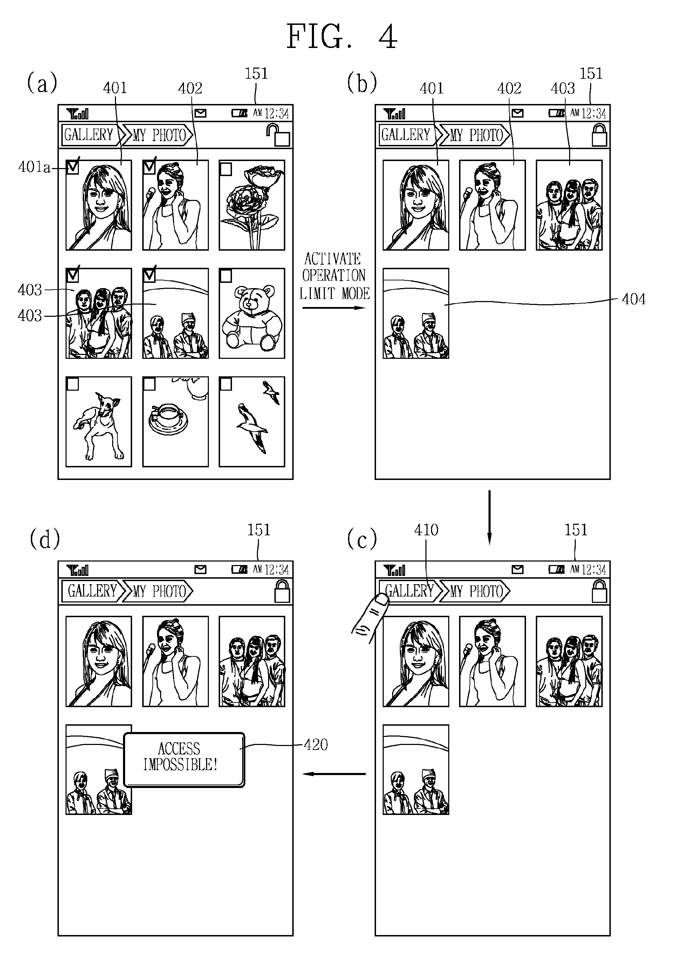

Hereinafter, a method for setting an access range with respect to contents will be described with reference to the accompanying drawings. FIG. 3 is a flow chart illustrating a control method of a mobile terminal according to an embodiment of the present invention, and FIG. 4 is a conceptual view illustrating the control method of FIG. 3.

In the mobile terminal according to an embodiment of the present invention, an access range with respect to contents is set (S31 0).

Here, the access range refers to setting an access range with respect to contents or any least one of functions associated with contents. Namely, setting an access range may refer to setting authority to execute a function related to contents.

For example, when certain contents is within an access range, the controller 180 may permit accessing the certain contents. When certain content is not within the access range, the controller 180 may not permit access to the certain contents. Here, 'access' may be a control command for executing a function associated with the certain contents.

Meanwhile, the access range may be set for contents itself. In this case, all the functions associated with contents may be affected by the pre-set access range. For example, when an access to certain contents is limited, functions (e.g., outputting, editing, and the like) associated with the certain contents may be all omitted.

Also, the access range may be set for at least some of the functions associated with contents. For example, an output function with respect to certain contents may be permitted, while an editing function thereof may be limited. Namely, although contents are within the access range, the controller 180 may permit access only to some of the functions associated with the contents.

Meanwhile, an access range with respect to functions related to contents may vary according to types of contents. The access range with respect to functions according to types of contents may be previously set, or may be individually set by a user. For example, in a case in which certain contents is an image, when the certain contents are within the access range, the controller 180 may permit the output function with respect to the certain contents, but may not permit the editing function thereof.

Meanwhile, here, 'function related to contents' may be at least one of an output function, a play function, an editing function, an executing function, a transmitting function, a sharing function, a function of uploading to an external server, and a deleting function.

Meanwhile, here, the contents refers to various types of data that may be used in the mobile terminal. For example, contents may be at least one of an image, a video, music, software, an electronic document. Here, using contents in the mobile terminal' refers to performing at least one of outputting contents, playing contents, editing contents, executing contents, transmitting contents, sharing contents, uploading contents to an external server, and deleting contents. Such contents may be stored in the memory 160 (at least one of an internal memory and an external memory) or may be stored in an external server (e.g., a cloud server).

Meanwhile, an access range with respect to contents may be set for single particular contents or a plurality of contents. Meanwhile, an access range with respect to contents may be set in an application installed in the mobile terminal. Also, an application for setting an access range may differ according to types of contents. For example, an access range with respect to contents corresponding to an image may be set through a gallery function application, and an access range with respect to contents corresponding to an electronic document (e.g., an electronic book (an e-book)) may be set through an e-book function application.

Meanwhile, after the access range is set, an operation limit mode is activated (S320).

Here, the operation limit mode refers to a mode in which only contents within an access range are permitted to access. Namely, in the operation limit mode, only functions related to some contents within the access range among a plurality of contents can be executed. Meanwhile, although certain contents is within an access range, only some of the functions with respect to the contents may be permitted to access.

Meanwhile, the operation limit mode may be activated according to a user request or may be activated automatically under the control of the controller 180. Namely, when a state of the mobile terminal corresponds to a pre-set condition, the controller 180 may automatically activate the operation limit mode.

Here, the pre-set condition may be set in advance on the basis of a user selection. For example, the pre-set condition may be a case in which an authorized user is not recognized for a pre-set period of time. Here, recognizing an authorized user may be sensed by various sensors provided in the mobile terminal.

Meanwhile, a user request for activating the operation limit mode may be a control command received by the mobile terminal on the basis of a user selection. For example, when hardware key (e.g., 132) provided in the body of the mobile terminal 100 is pressurized by a pre-set period of times or according to a pre-set pattern, the controller 180 may determine that a user request for activating the operation limit mode has been received. Meanwhile, the method for activating the operation limit mode may include various embodiments, and the various embodiments will be described later.

Meanwhile, activation of the operation limit mode may not be temporally continued with setting an access range with respect to contents. Namely, an access range with respect to contents may be set at a first point in time on the basis of a user selection, and the operation limit mode may be activated at a second point in time spaced apart from the first point in time. Meanwhile, an access range with respect to contents may be disposable. Namely, after the access range is set, when the operation limit mode is activated and then deactivated, the access range may be reset.

Meanwhile, besides the method for separately setting an access range on the basis of a user selection as described above in step S310, the access range may be automatically set when the operation limit mode is activated. For example, in this case, an access range may be set by contents output to the display unit 151 at a point in time at which the operation limit mode is activated. Also, in such a case, the access range may be set by a group (or a folder) to which contents output to the display unit 151 at a point in time at which the operation limit mode is activated belong.

Meanwhile, in the state in which the operation limit mode is activated, a request for outputting contents is received (S330).

Meanwhile, when the request for outputting contents is received, contents corresponding to the output request is output to the display unit 151 according to whether contents corresponding to the output request are within the access range (S340).

Namely, when the contents corresponding to the output request is within the access range, the controller 180 may output the contents corresponding to the output request to the display unit 151, and when the contents corresponding to the output request is out of the access range, the controller 180 may not output the contents corresponding to the output request to the display unit 151.

Meanwhile, when the contents corresponding to the output request is out of the access range, the controller 180 may output notification information indicating that the contents corresponding to the output request is not within the access range, through at least one of a visual method, an audible method, and a tactile method. In addition, in such a case, the controller 180 may output induction information for inducing the user to input identification information corresponding to a pre-set method for deactivating the activated operation limit mode through at least one of a visual method, an audible method, and a tactile method.

Meanwhile, when a function different from the output request is requested with respect to contents within the access range, the controller 180 may determine whether the different function is within the access range, and determine whether to execute the different function according to the determination results.

Meanwhile, the output request with respect to the contents as described above in step S330 corresponds to an example of the present invention, and step S330 may be understood as step of receiving a request for performing a function related to the contents. In such a case, when the contents are within the access range, the controller 180 may execute the function related to the contents. In addition, if the function itself related to the contents is not within the access range, although the contents is within the access range, the controller 180 may not execute the function related to the contents.

An example of the control method described above with reference to FIG. 3 will be described with reference to FIG. 4. First, as illustrated in (a) of FIG. 4, the controller 180 may set an access range with respect to contents on the basis of a user selection.

Here, the contents may be images available through the galley function application. For example, as illustrated in (a) of FIG. 4, the controller 180 may include at least one image selected by the user from among a plurality of images, in the access range.

Meanwhile, an access range setting mode for setting the access range may be activated through a function icon provided through the gallery function application or may be activate by a control command according to a pre-set scheme applied to the mobile terminal. Namely, the access range setting mode for setting an access range may be activated on the basis of a user selection.

Meanwhile, when the access range setting mode is executed, the controller 180 may output a select window (please see 401a for selecting contents output to at least a portion of the contents output to the display unit 151 or to a region adjacent to the contents. When a touch input is applied to the select window 401a, the controller 180 may include the output contents in the access range.

Meanwhile, after setting of the access range is completed, when the operation limit mode is activated, the controller 180 may output only contents (or images 401, 402, 403, 404) within the access range to the display unit 151, and may not output contents not within the access range, as illustrated in (b) of FIG. 4. Also, although not shown, besides the method of outputting contents not within the access range, the controller 180 may shade the contents not within the access range such that the contents is not visually recognizable.

Also, although not shown, as illustrated in (b) of FIG. 4, when any one contents 401 within the access range is selected, the controller 180 may magnify and output the contents 401 to the display unit 151.

Meanwhile, as illustrated in (c) of FIG. 4, in a case in which a request for outputting contents not within the access range is received (e.g., in a case in which a request for moving to an area including different contents not within the access range is received through a 'gallery icon 410'), the controller 180 may disregard the request for outputting the contents not within the access range. Also, when the request for outputting contents not within the access range is received, the controller 180 may output notification information indicating that there is no authority to access the contents not within the access range in response as illustrated in (d) of FIG. 4.

As described above, in the mobile terminal and the control method thereof according to the embodiment of the present invention, the operation limiting mode for partially limiting operations of the mobile terminal is provided to protect privacy of a proper user against a third party.

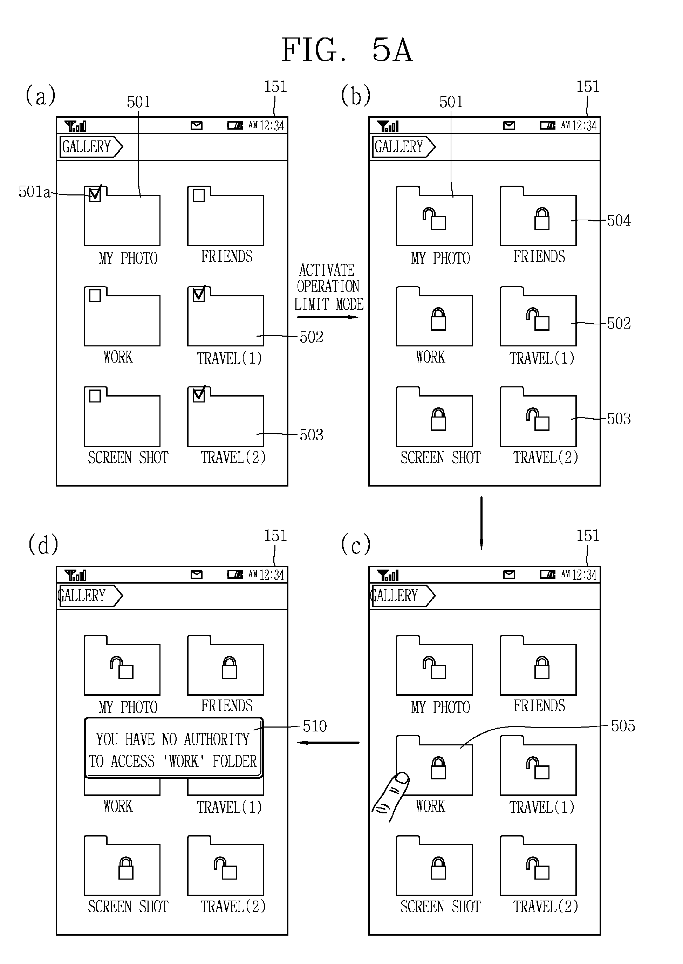

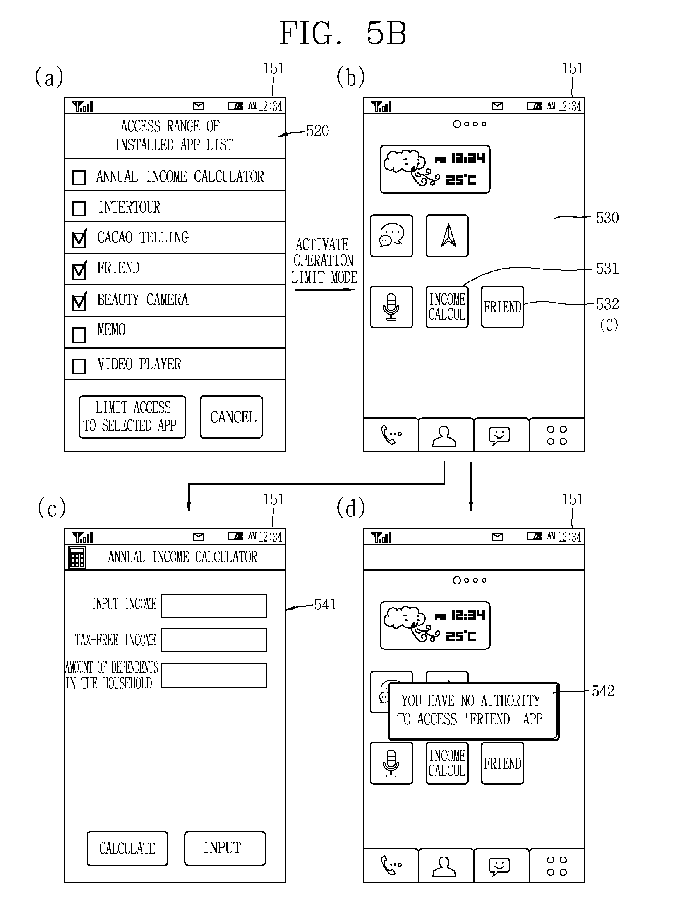

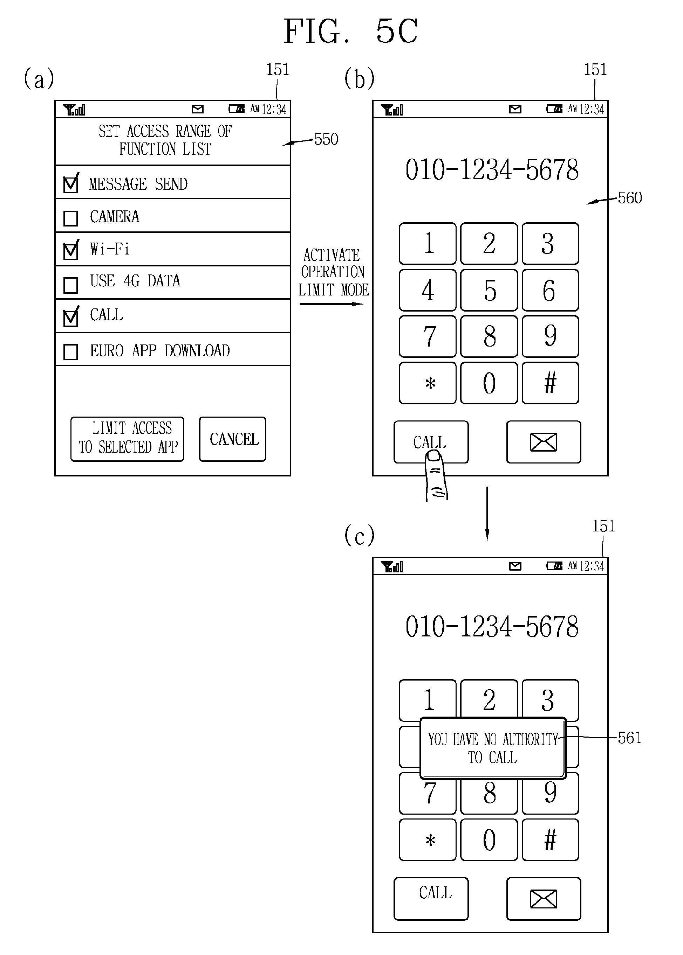

Hereinafter, a range to which the operation limit mode is applicable in the mobile terminal according to an embodiment of the present invention will be described in detail with reference to the accompanying drawings. FIGS. 5A, 5B, and 5C are conceptual views illustrating a range to which an operation limit mode is applicable in the mobile terminal according to an embodiment of the present invention.

In the mobile terminal according to an embodiment of the present invention, as described above with reference to FIG. 4, an access range may be set for contents itself individually. In addition, in the mobile terminal according to an embodiment of the present invention, besides the setting an access range for contents individually, an access range may be set in units of groups (or folders) including at least one contents. Here, a group may be a group which includes at least one contents and formed on the basis of a pre-set reference, and the pre-set reference may be variously modified.

For example, as illustrated in (a) of FIG. 5A, the controller 180 may set an access range in units of image groups.

As illustrated, graphic objects (e.g., a folder image) corresponding to the groups formed on the basis of the pre-set reference may be output to the display unit, and when the access range setting mode is executed, the controller 180 may set at least one group as an access range according to a user selection.

Meanwhile, the access range setting mode for setting an access range may be activated through a separate function icon provided through the gallery function application or may be activated according to a control command according to a pre-set scheme applied to the mobile terminal. Namely, the access range setting mode for setting an access range may be activated on the basis of the user selection. Meanwhile, when the access range setting mode is executed, the controller 180 may output a select window 501a for selecting a group corresponding to an image object to at least a portion of an image object output to the display unit 151 or to a region adjacent to the contents, in order to select a group corresponding to the image object. When a touch input is applied to the select window 501a, the controller 180 may include a group corresponding to the output image object in the access range.

Meanwhile, after the access range is set, as illustrated in (b) and (c) of FIG. 5A, when the operation limit mode is activated and a group 505 not within the access range is selected, the controller 180 may output notification information indicating that the group 505 cannot be accessed as illustrated in (d) of FIG. 5A.

Meanwhile, in the mobile terminal according to an embodiment of the present invention, in addition to setting an access range with respect to contents and performing the operation limit mode thereon, the operation limit mode may also be performed on an application installed in the mobile terminal.

For example, as illustrated in (a) of FIG. 5B, the controller 180 may set an access range for limiting an access to at least one of applications installed in the mobile terminal according to a user selection. A list 520 of applications installed in the mobile terminal may be output to the display unit 151, and the user may select at least one application to be limited for access through the list 520. As illustrated, on the basis of the user selection, the controller 180 may include a 'cacao telling' application, a 'friend' application, and a 'beauty camera' application in the access limit range.

Thus, in the state in which the operation limit mode is activated, when an 'annual income calculator' application permitted for access is selected as illustrated in (b) of FIG. 5B, the controller 180 may execute the 'annual income calculator' application and output a graphic user interface (GUI) (e.g., an execution screen) with respect to the 'annual income calculator' as illustrated in (c) of FIG. 5B. Also, in a state in which the operation limit mode is activated, when the 'friends' application limited for access is selected as illustrated in (b) of FIG 5B, the controller may limit execution of the 'friend' application as illustrated in (d) of FIG. 5B. In this case, the controller 180 may output notification information 542 indicating that access to the 'friend' application is limited.

Meanwhile, in the mobile terminal according to an embodiment of the present invention, in addition to setting an access range with respect to contents and performing an operation limit mode thereon, the operation limit mode may also be performed on a function of the mobile terminal.

For example, as illustrated in (a) of FIG. 5C, the controller may set an access range for limiting an access to at least one of functions that may be performed through the mobile terminal according to a user selection. A function list 550 corresponding to functions that may be performed in the mobile terminal may be output to the display unit 151, and the user may select at least one function to be limited for access from the list 550. As illustrated, on the basis of a user selection, the controller 180 may include a 'message send' function, a 'Wi-Fi' function, and a 'call' function in the access limit range.

Thus, in a state in which the operation limit mode is activated, when the call function limited for access is requested as illustrated in (b) of FIG. 5C, the controller 180 may limit execution of the call function as illustrated in (c) of FIG. 5C. In this case, the controller 180 may output notification information 561 indicating that the call function is limited.

As described above, in the mobile terminal and the control method thereof according to embodiments of the present invention, since the operation limit mode is utilized for applications and the functions performed in the mobile terminal, as well as for contents, user convenience can be enhanced.

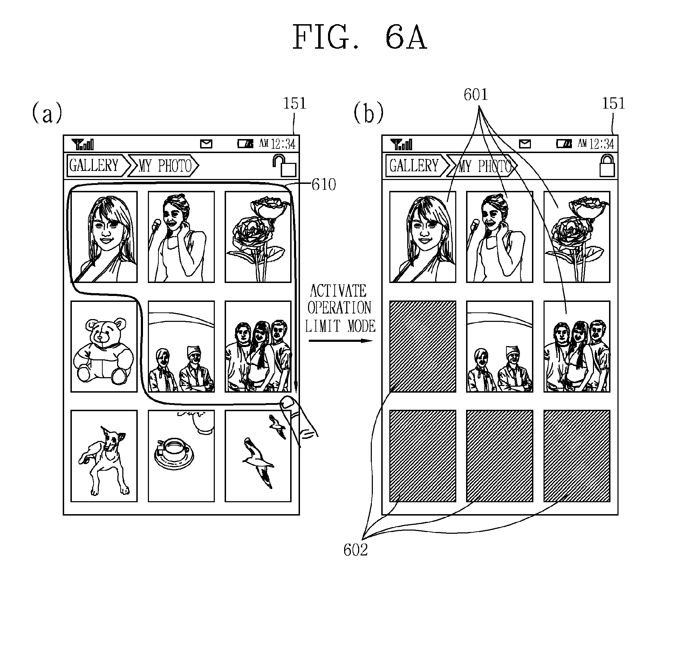

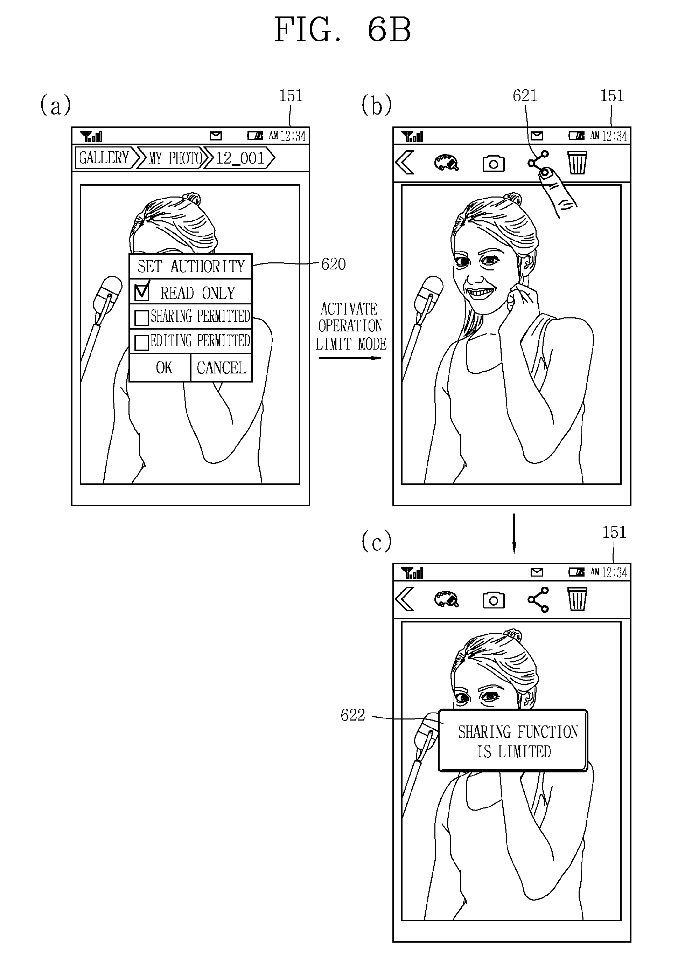

Hereinafter, an example of setting an access range will be described in detail with reference to the accompanying drawings. FIGS. 6A and 6B are conceptual views illustrating a method for setting an access range with respect to contents and an access range in the mobile terminal according to an embodiment of the present invention.

In the mobile terminal according to an embodiment of the present invention, the controller 180 may set an access range with respect to contents on the basis of a touch input applied to the display unit. As illustrated in (a) of FIG. 6A, in a state in which the access range setting mode is executed, the controller 180 may set contents included within a touch trace 610 of the touch input applied to the display unit 151. Here, the access range setting mode for setting an access range may be activated through a separate function icon provided through the gallery function application or activated by a control command according to a pre-set scheme applied to the mobile terminal. Namely, the access range setting mode for setting such an access range may be activated on the basis of a user selection.

In the state in which the access range is set, when the operation limit mode is activated, the controller 180 may limit access to contents 602 not included in the access range as illustrated in (b) of FIG. 6A.

Also, continued from the setting the access range, the controller 180 may set access authority with respect to contents or a function related to contents individually. For example, as illustrated in (a) of FIG. 6B, the controller 180 may permit or block at least one of functions related to contents (e.g., images) output to the display unit. For example, on the basis of a user selection, the controller 180 may permit a reading function with respect to contents or may block sharing and editing functions thereof. Thus, as illustrated in (b) of FIG. 6B, in the state in which the operation limit mode is activated, when a function icon 621 corresponding to the sharing function is selected, the controller 180 may not perform the sharing function. In addition, as illustrated in (c) of FIG. 6A, the controller 180 may output notification information 622 indicating that the sharing function is blocked.

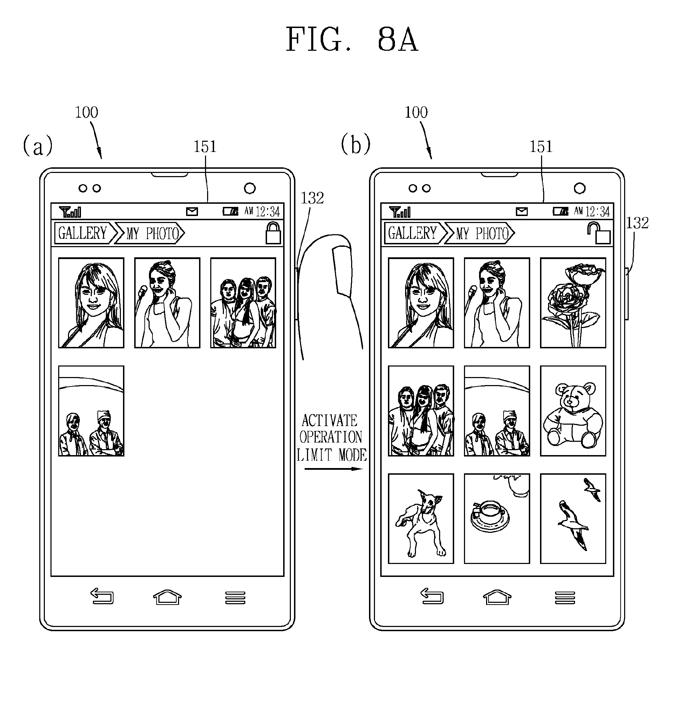

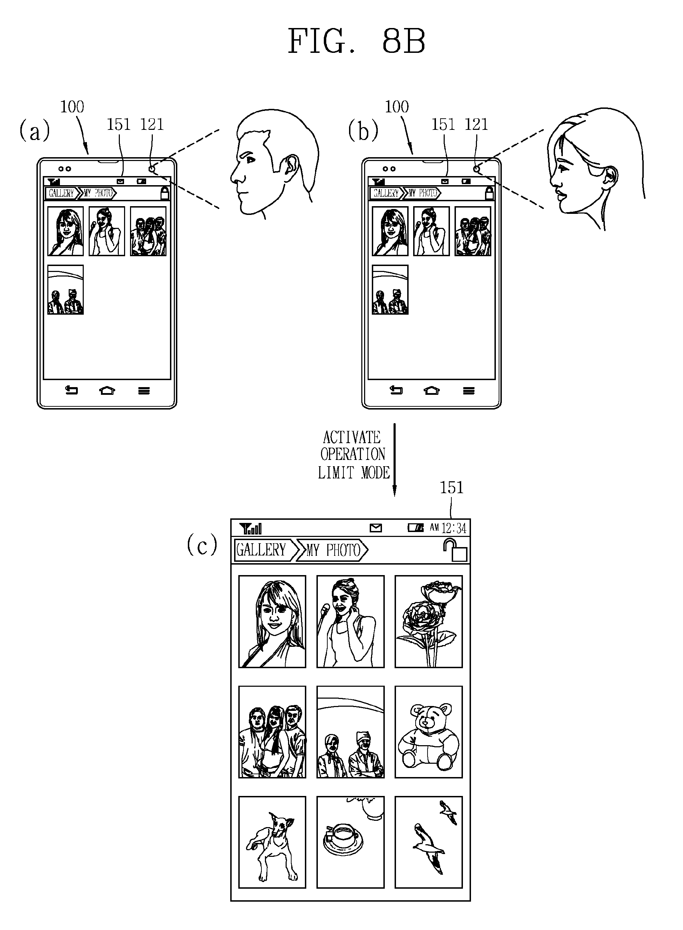

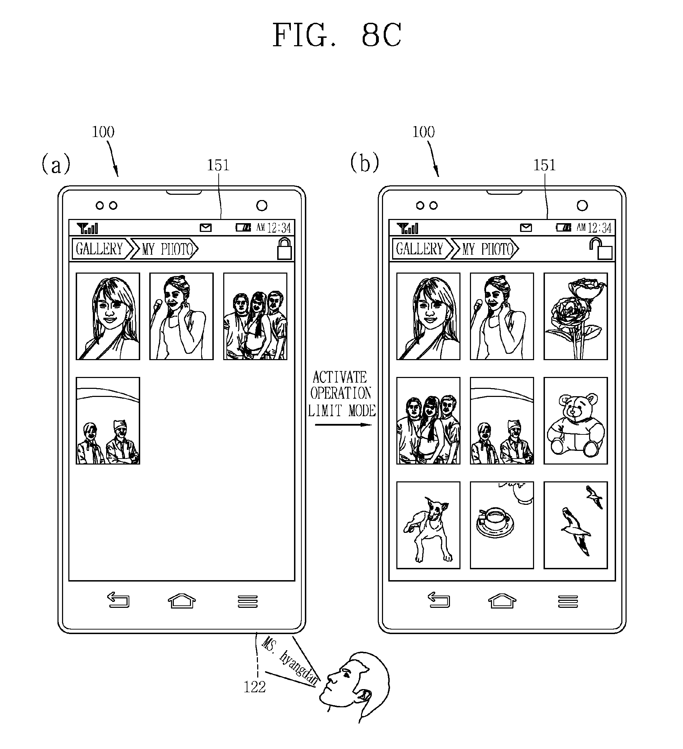

Hereinafter, a method for activating or deactivating the operation limit mode will be described in detail with reference to the accompanying drawings. FIGS. 8A, 8B, and 8C are conceptual views illustrating a method for deactivating the operation limit mode in the mobile terminal according to an embodiment of the present invention.

In the mobile terminal according to an embodiment of the present invention, the operation limit mode may be deactivated according to a user request or the operation limit mode may be automatically deactivated under the control of the controller 180. Namely, when a state of the mobile terminal corresponding to a pre-set condition, the controller 180 may change the activated operation limit mode into a deactivated state.

Here, the pre-set condition may be set on the basis of a user selection in advance. For example, the pre-set condition may be a case in which a proper user is recognized for a pre-set period of time. Here, the recognizing a proper user may be sensed by various sensors provided in the mobile terminal.

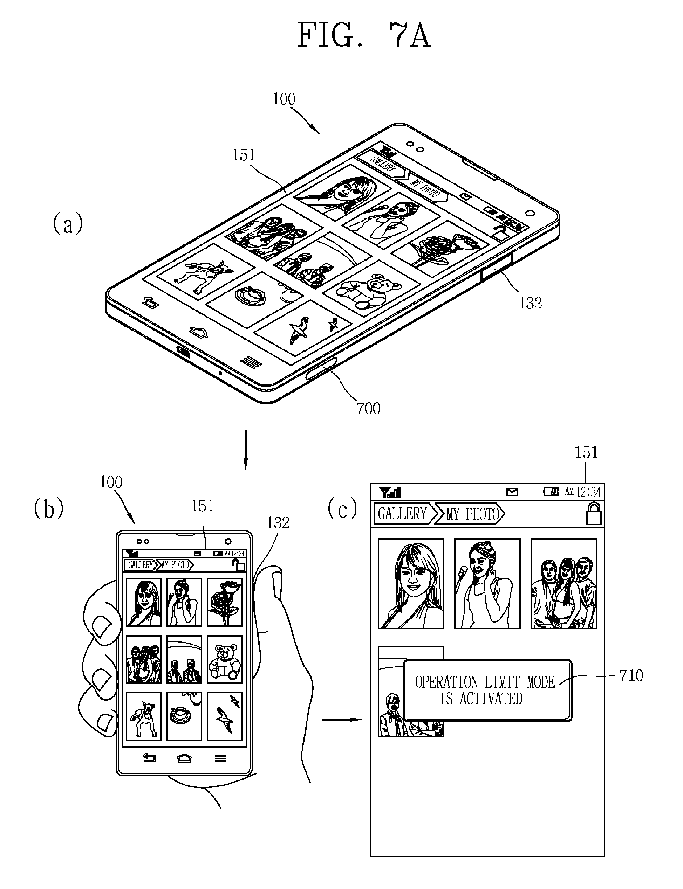

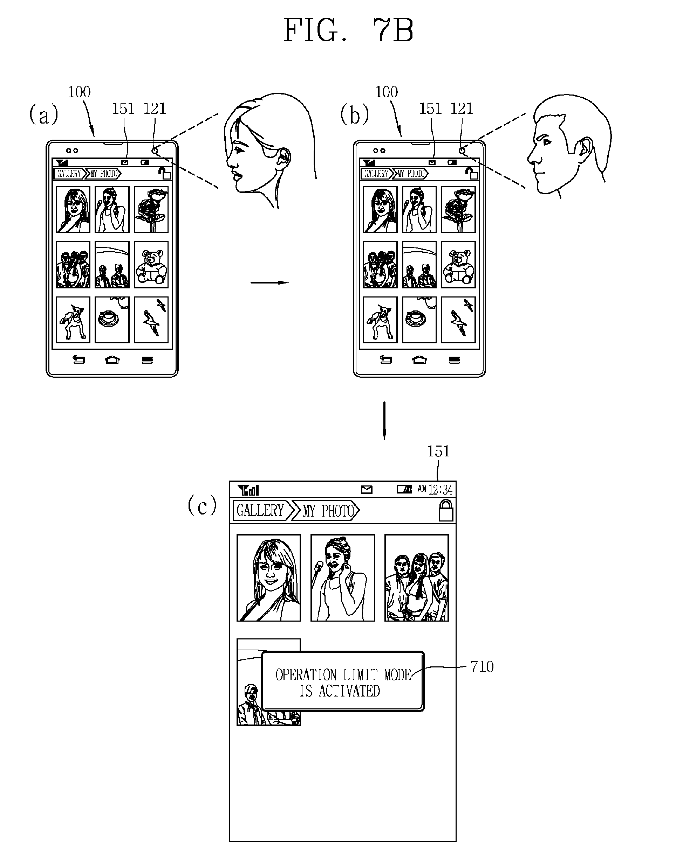

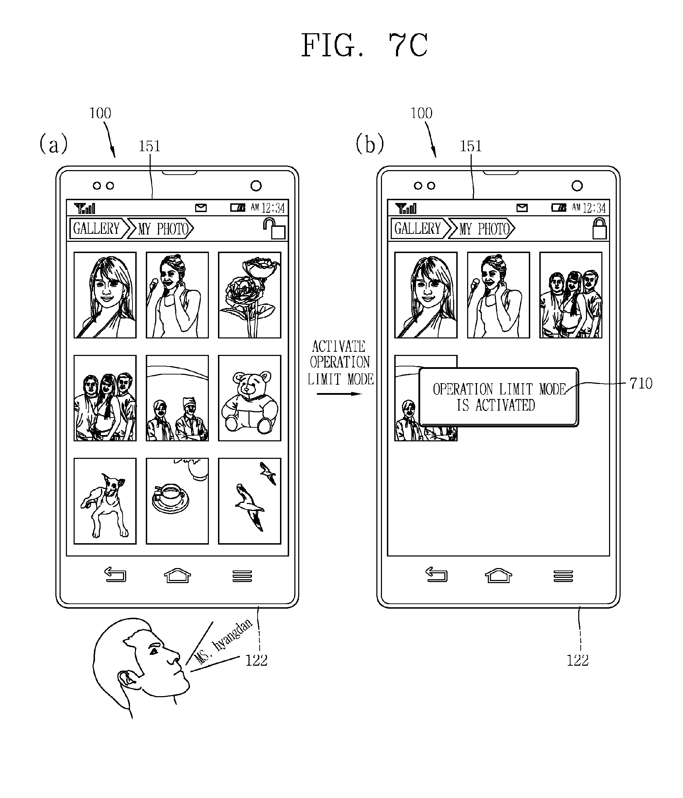

For example, as illustrated in FIG. 7A, the body of the mobile terminal 100 may include a fingerprint recognizing unit 700, and when a fingerprint of a proper user is recognized by the fingerprint recognizing unit 700, the controller 180 may deactivate the operation limit mode.

The controller 180 may check a fingerprint sensed by the finger recognizing unit 700 at pre-set time intervals. Meanwhile, the fingerprint of the proper user may be recognized and registered (or stored) through an initial setting with respect to the mobile terminal or according to a user request.

Meanwhile, a user request for activating the operation limit mode may be a control command received by the mobile terminal on the basis of a user selection. For example, as illustrated in (a) and (b) of FIG. 8A, when a hardware key 132 provided in the body of the mobile terminal 100 is pressurized by a pre-set number of times or according to a pre-set pattern, the controller 180 may determine that a user request for deactivating the operation limit mode has been received. In such a case, the operation limit mode may be deactivated.

In another example, when a face of a proper user is recognized through the camera 121, the controller 180 may deactivate the operation limit mode. For example, a proper user is not recognized as illustrated in (a) of FIG. 8B, and when a proper user is recognized as illustrated in (b) of FIG. 8B, the operation limit mode may be deactivated as illustrated in (c) of FIG. 8B. In this case, the controller 180 may recognize the face of the proper user through the camera 121 in real time or pre-set time intervals. Meanwhile, the face of the proper user may be recognized and registered (or stored) through an initial setting or according to a user request.

In another example, the controller 180 may deactivate the operation limit mode on the basis of a user's voice command. The voice command may be recognized through the microphone 122. When a voice recognized through the microphone 122 is a voice of a proper user, the controller 180 may deactivate the operation limit mode. In addition, when the voice recognized through the microphone 122 is a voice of a proper user and it corresponds to a pre-set command, the controller 180 may deactivate the operation limit mode. For example, in a case in which the pre-set command is 'Hyangdan a', when a voice 'Hyangdan a' is input through the microphone 122 as illustrated in (a) of FIG. 8C, the controller 180 may deactivate the operation limit mode as illustrated in (b) of FIG. 8C. In this case, the controller 180 may analyze whether the recognized voice is a voice of a proper user, and when the recognized voice is not a voice of a proper user according to the analysis results, the controller 180 may maintain the activated state of the operation limit mode.

Also, although not shown, the controller 180 may analyze a voice input through the microphone 122 in real time or at pre-set time intervals, and when a voice of a proper user is not recognized for a pre-set period of time, the controller 180 may automatically activate the operation limit mode.

As described above, in the case of the mobile terminal and the control method thereof according to embodiments of the present invention, user privacy can be effectively protected by automatically activating or deactivating the operation limit mode.

Also, in the case of the mobile terminal and the control method thereof according to embodiments of the present invention, when a proper user is recognized through face recognition or fingerprint recognition, the operation limit mode can be changed to a deactivated state. Thus, user inconvenience of inputting a password, or the like, can be reduced.

Also, in the case of the mobile terminal and the control method thereof according to embodiments of the present invention, the operation limit mode is provided and only pre-set contents is output to the display unit, whereby user privacy can be protected from others.

In addition, in the case of the mobile terminal and the control method thereof according to embodiments of the present invention, since a range accessible by others is set for applications, as well as for contents, execution of an application by others can be prevented.

In the embodiments of the present invention, the foregoing method may be implemented as codes that can be read by a processor in a program-recorded medium. The processor-readable medium may include any types of recording devices in which data that can be read by a computer system is stored. The processor-readable medium may include a ROM, a RAM, a CD-ROM, a magnetic tape, a floppy disk, an optical data storage device, and the like. The processor-readable medium also includes implementations in the form of carrier waves or signals (e.g., transmission via the Internet).

The mobile terminal according to the embodiments of the present disclosure is not limited in its application of the configurations and methods, but the entirety or a portion of the embodiments can be selectively combined to be configured into various modifications.

As the exemplary embodiments may be implemented in several forms without departing from the characteristics thereof, it should also be understood that the above-described embodiments are not limited by any of the details of the foregoing description, unless otherwise specified, but rather should be construed broadly within its scope as defined in the appended claims. Therefore, various changes and modifications that fall within the scope of the claims, or equivalents of such scope are therefore intended to be embraced by the appended claims.

## Claims

1. A mobile terminal comprising:
a display unit (151) configured to output visual information;
a memory (160) configured to store contents;
a user input unit (130) configured to set an access range with respect to contents; and
a controller (180) configured to determine whether to output contents stored in the memory (160) according to an output request when the output request with respect to the contents is received in a state in which an operation limit mode is activated,
wherein the controller (180) outputs the contents corresponding to the output request to the display unit (151) according to whether the contents corresponding to the output request is within the access range.

2. The mobile terminal of claim 1, wherein when the contents corresponding to the output request is within the access range, the controller (180) outputs the contents corresponding to the output request to the display unit, and when the contents corresponding to the output request is not within the access range, the controller (180) does not output the contents corresponding to the output request.

3. The mobile terminal of claim 2, wherein when the contents corresponding to the output request is not within the access range, the controller (180) outputs notification information indicating that the contents corresponding to the output request is not within the access range through at least one of visual, audible, and tactile methods.

4. The mobile terminal of claim 3, wherein induction information inducing inputting of user identification information corresponding to a pre-set scheme for deactivating the operation limit mode is output to the display unit (151).

5. The mobile terminal of claim 1, wherein the access range individually includes contents stored in the memory or at least one contents, and is set for a group formed on the basis of a pre-set reference.

6. The mobile terminal of claim 5, wherein the controller (180) executes an access range setting mode for setting the access range on the basis of a user selection and
outputs a select window for selecting contents output to at least a portion of the contents output to the display unit (151) or to a region adjacent to the contents, and
when a touch input is applied to the select window, the controller (180) includes the output contents in the access range.

7. The mobile terminal of claim 5, wherein graphic objects corresponding to groups formed on the basis of the pre-set reference are output to the display unit (151), and
when an access range setting mode for setting the access range is executed, the controller (180) outputs a select window for receiving a control command for setting the group as an access range to at least a portion of the graphic object or a region adjacent to the graphic object, and
when a touch input is applied to the select window, the controller (180) sets the group corresponding to the select window to which the touch input has been applied, as an access range.

8. The mobile terminal of claim 1, wherein in a state in which the access range is not set for the contents, when the operation limit mode is activated, the controller (180) automatically sets the group including the contents output to the display unit (151), as the access range.

9. The mobile terminal of claim 8, further comprising:
at least one of a camera (121) and a fingerprint recognizing unit, and
the operation limit mode is activated when a pre-set proper user is not recognized for a pre-set period of time through at least one of the camera (121) and the fingerprint recognizing unit.

10. The mobile terminal of claim 1, wherein the operation limit mode is activated when a function icon output to the display unit (151) is selected after the access range is set, or when a voice command corresponding to a pre-set word is applied.

11. The mobile terminal of claim 1, further comprising:
at least one of a camera (121) and a fingerprint recognizing unit, and
when the operation limit mode is activated, the controller determines whether identification information recognized through at least one of the camera and the fingerprint recognizing unit corresponds to a pre-set proper user.

12. The mobile terminal of claim 11, wherein when the identification information is recognized to correspond to the pre-set proper user according to the determination result, the controller (180) deactivates the operation limit mode.

13. The mobile terminal of claim 1, wherein in a state in which the operation limit mode is activated, when a function different from an output function with respect to contents within the access range is requested, the controller (180) limits execution of the different function.

14. The mobile terminal of claim 13, wherein the different function is a function of transmitting at least one of contents within the access range to an external terminal or an external server.

15. A mobile terminal comprising:
a user input unit (130) configured to set an access range with respect to an application installed in the mobile terminal; and
a controller (180) configured to activate an operation limit mode in response to a first control command input through the user input unit,
wherein when a second control command for executing an application is input in a state in which the operation limit mode is activated, the controller (180) executes an application for which the second control command has been applied according to whether the application for which the second control command has been applied is within the access range.
